# EUROPEAN PATENT APPLICATION

(11) **EP 2 832 220 A1**
(43) Date of publication of application: **04.02.2015**
(21) Application number: 12873350.8
(22) Date of filing: 30.03.2012
(51) Int. Cl.: A01K 29/00, A01K 67/00, A61D 1/08

(54) **CORRECTION METHOD FOR NUMBER OF STEPS, CORRECTION DEVICE FOR NUMBER OF STEPS, CORRECTION PROGRAM FOR NUMBER OF STEPS, ESTRUS NOTIFICATION METHOD, ESTRUS NOTIFICATION DEVICE**

(71) Applicant: FUJITSU LIMITED, Kawasaki-shi Kanagawa 211-8588 (JP)
(72) Inventor: UCHINO, Tetsuya, Fukuoka-shi Fukuoka 814-8589 (JP); MOTOSHIMA, Toshimi, Fukuoka-shi Fukuoka 814-8589 (JP); KANAMORI, Akihito, Fukuoka-shi Fukuoka 814-8589 (JP); INENAGA, Mitsuhisa, Fukuoka-shi Fukuoka 814-8589 (JP); WATANABE, Katsuyoshi, Nakahara-ku, Kawasaki-shi Kanagawa 211-8588 (JP); YAMANO, Daiji, Kawasaki-shi Kanagawa 211-8588 (JP)
(74) Representative: Cooper-Rolfe, Elizabeth Louise
(86) International application number: PCT/JP2012/058721
(87) International publication number: WO 2013/145305

(57) **Abstract**

On a farm (F), a livestock animal (A) is pastured, and a communications device (101) that measures a step count of the livestock animal (A) is attached to the livestock animal (A). The step count correcting apparatus (103), via a relay device (102) installed on the farm (F), receives from the communications device (101), measurement result information indicating a measurement result of the step count of the livestock animal (A). Further, the step count correcting apparatus (103) obtains information indicating the weather on the farm (F) when the communications device (101) measured the step count of the livestock animal (A). The step count correcting apparatus (103) corrects the measured step count of the livestock animal (A) according to the weather on the farm (F) when the communications device (101) measured the step count of the livestock animal (A). The step count correcting apparatus (103) transmits to a client apparatus (104) information indicating the post-correction step count.

## Description

### TECHNICAL FIELD

The present invention relates to a step count correcting method, a step count correcting apparatus, a step count correcting program, an estrus notifying method, and an estrus notifying apparatus.

### BACKGROUND ART

A technique of attaching a pedometer to livestock such as grazing cattle and measuring the number of steps walked to detect changes in the state of the animal, such as the onset of estrus or illness is known. Based on the detection of a change in the state of the animal via the pedometer, a worker makes a determination such as whether to mate the animal, administer medical treatment, etc.

Patent Document 1: Japanese Laid-Open Patent Publication No. 2002-360549

### DISCLOSURE OF INVENTION

### PROBLEM TO BE SOLVED BY THE INVENTION

The environment of a pasture area in which livestock are pastured changes moment to moment consequent to, for example, rain in the pasture area, and the environment when the step count is measured is not constant. Therefore, variation of the livestock step count occurs consequent to the environment at the time of measurement. For example, the livestock step count measured during rain tends to decrease compared to the step count measured during dry weather. Therefore, with the conventional technique, when changes in the state of livestock are to be detected from measured livestock step counts, the accuracy of detecting changes in the state of livestock drops consequent to variation of measurement results arising from environmental differences at the time of measurement.

To solve the problems associated with the conventional techniques above, one object of the present invention is to provide a step count correcting method, a step count correcting apparatus, a step count correcting program, an estrus notifying method, and an estrus notifying apparatus that can improve the accuracy when detecting changes in livestock from livestock step counts.

### MEANS FOR SOLVING PROBLEM

To solve the problems above and achieve an object, according to one aspect of the present invention, a step count correcting method, a step count correcting program, and a step count correcting apparatus that correct a step count measurement result from a step counting device attached to a livestock animal are proposed. The step count correcting method, the step count correcting program, and the step count correcting apparatus obtain the livestock step count measurement result, a report location and a report time of the step count measurement result, and weather information corresponding to the report location and the report time; determine based on the weather information, whether correction of the step count measurement result is required; correct the step count measurement result based on the weather, if the correction of the step count measurement result is determined to be required; and output the corrected step count measurement result.

Further, according to one aspect of the present invention, an estrus notifying method and an estrus notifying apparatus that determine estrus based on a step count measurement result from a step counting device attached to a livestock animal are proposed. The estrus notifying method, and the estrus notifying apparatus obtain the livestock step count measurement result, a report location and a report time of the step count measurement result, and weather information that corresponds to the report location and the report time; determine based on the weather information, whether correction of the step count measurement result is required; determine based on a result of determining whether correction is required and the step count measurement result, estrus of the livestock animal; and output identification information of the livestock animal determined to be in estrus.

### EFFECT OF THE INVENTION

According to one aspect of the present invention, the accuracy when detecting changes of livestock from livestock step counts can be improved.

### BRIEF DESCRIPTION OF DRAWINGS

FIG. 1 is a diagram depicting one example of a step count correcting method of an embodiment;
FIG. 2 is a diagram depicting an example of system configuration of a step count correcting system 200;
FIG. 3 is a block diagram depicting a hardware configuration example of a communications device of the present embodiment;
FIG. 4 is a block diagram depicting a hardware configuration example of a relay device 102;
FIG. 5 is a block diagram depicting a hardware configuration example of a step count correcting apparatus 103, etc.;
FIG. 6 is a diagram depicting an example of the contents of a measurement result information table 201;
FIG. 7 is a diagram depicting an example of the contents of a weather information DB 202;
FIG. 8 is a diagram depicting an example of the contents of a weather correction value DB 203;
FIG. 9 is a diagram depicting an example of the contents of the relay device DB 204;
FIG. 10 is a diagram depicting an example of the contents of a soil correction value DB 205;
FIG. 11 is a diagram depicting an example of the contents of a step count DB 206;
FIG. 12 is a diagram depicting an example of the contents of a correction value history table 1200;
FIG. 13 is a block diagram depicting a functional configuration example of the step count correcting apparatus 103;
FIG. 14 is a diagram depicting an example of display by the client apparatus 104;
FIG. 15 is a flowchart depicting an example of a process performed by the communications device 101;
FIG. 16 is a flowchart (part 1) depicting an example of a process performed by the step count correcting apparatus 103; and
FIG. 17 is a flowchart (part 2) depicting the example of the process performed by the step count correcting apparatus 103.

### BEST MODE(S) FOR CARRYING OUT THE INVENTION

Embodiments of a step count correcting method, a step count correcting apparatus, a step count correcting program, an estrus notifying method, and an estrus notifying apparatus will be described in detail with reference to the accompanying drawings.

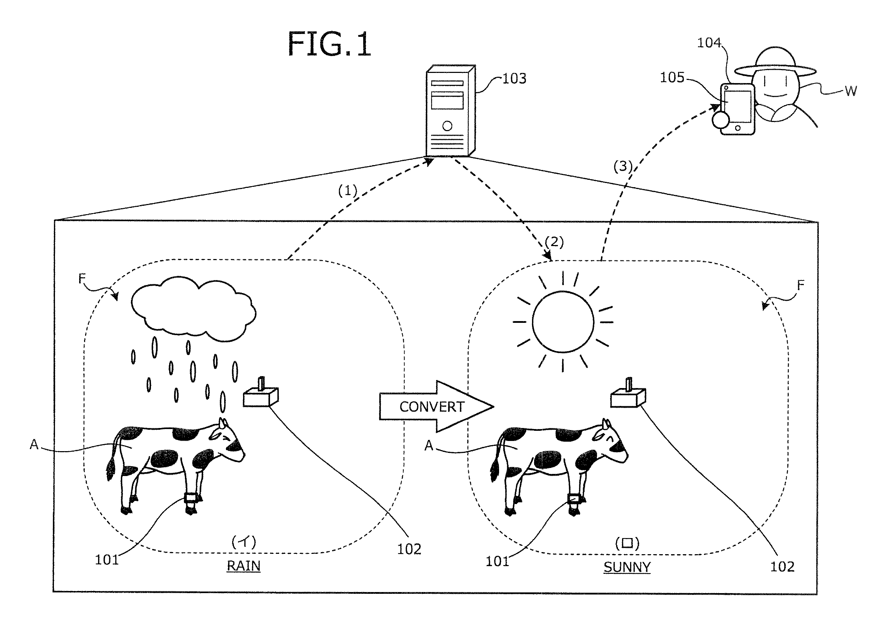

FIG. 1 is a diagram depicting one example of the step count correcting method of the present embodiment. In FIG. 1, livestock animals A are raised within the premises of a farm F managed by a worker W. Here, the worker W is one who is engaged in the livestock industry. The farm F is a facility that has a pasture area for pasturing the livestock animals A. A livestock animal A is an animal that can move within the pasture area in which the livestock animal A is pastured. For example, a livestock animal A is an animal that moves by ambulation, such as a cow, pig, horse, etc.

A communications device 101 is attached to each livestock animal A. Here, the communications device 101 is a portable computer that measures a step count of the livestock animal A. For example, when the livestock animal A walks, the livestock animal A steps with the right-front leg, sending the leg out toward the ground in the direction of travel. Upon planting the right-front leg on the ground, next, the livestock animal A steps with the left-front leg, sending the leg out toward the ground in the direction of travel. Upon planting the left-front leg on the ground, again, the livestock animal A steps with the right-front leg, and repeats this series of actions. In other words, the step count of the livestock animal A can be the number of times that the livestock animal A steps with the right-front leg or the left-front leg, sending the leg out toward the ground in the direction of travel.

For example, when the state of the livestock animal becomes an abnormal state, which differs from a normal state, consequent to an emotional or physical change of the livestock animal A, such as the onset of estrus or illness, giving birth, the appearance of a natural predator, etc., the step count per unit time of the livestock animal A increases or decreases compared to that for the normal state. Here, estrus is an excited state accompanying reproductive activity of the livestock animal A. Illness is a state in which the physical or emotional state of the livestock animal A is poor or unfavorable.

Birth is a state when a calf is pushed out from the womb or a state indicating a sign thereof. A change consequent to the appearance of a natural predator is a state of being physically and emotionally cornered by the appearance of a natural predator such as a wolf. If an abnormal state of the livestock animal A occurs, the step count measured from the livestock animal A has a characteristic of changing. From measurement results of the step count of the livestock animal A, the worker W can know whether a change has occurred with the livestock animal A.

The communications device 101 is capable of communicating with multiple relay devices 102 installed within the premises of the farm F. Here, the relay device 102 is a computer that is capable of communicating with the communications device 101 and a step count correcting apparatus 103 described hereinafter. Each of the relay devices 102 is installed at a different position in the farm F.

The relay device 102 can communicate with a communications device 101 located within a given range. For example, the relay device 102 can communicate with a communications device 101 located within a range of a 150-meter radius around the relay device 102. The communications device 101 transmits to the step count correcting apparatus 103, via a communicable relay device 102, measurement result information indicating measurement results of the step count of the livestock animal A.

The step count correcting apparatus 103 is a computer that is connected to the relay devices 102, and via the relay devices 102, is able to receive the measurement result information transmitted by the communications device 101. Further, for example, the step count correcting apparatus 103 can be communicably connected to the client apparatus 104, via a given line.

The client apparatus 104 is a portable computer having a display 105 and capable of communicating with the step count correcting apparatus 103. The client apparatus 104, upon receiving information from the step count correcting apparatus 103, displays images based on the received information, on the display 105.

Here, as a technique of finding an abnormal state of a pastured livestock animal A, for instance, an example will be given describing a technique of finding an estrus state of a female cow. When a female cow has entered estrus, the female cow actively walks. If the worker W is in the vicinity of the female cow, the worker W can visually check the state of the female cow to know whether the female cow is in estrus. Nonetheless, since the worker W has other work such as cleaning the cattle shed, the worker W cannot always visually monitor the state of the female cow.

If a female cow enters estrus when the worker W is not around, the worker W may not realize that the female cow has entered estrus, losing an opportunity to mate the female cow having a possibility of becoming impregnated. The loss of an opportunity to mate a female cow having a possibility of becoming impregnated is a financial loss for the worker W and the manager of the farm F.

When pasturing female cows, the worker W may also pasture stud bulls for natural mating to occur. However, natural mating by a stud bull is not desirable from the viewpoint of current livestock management ideals of producing better offspring. Furthermore, since bulls are aggressive, only an experienced worker W can handle the bulls and thus, this technique is problematic.

Further, a technique is present that uses the characteristic that when a female cow is in estrus, the behavior of the female cow becomes more active whereby the step count increases. The technique involves attaching a pedometer to female cows and periodically notifying the worker W of the step counts of the female cows. Nonetheless, the step count of a female cow increases and decreases consequent to other factors in addition to an abnormal state such as estrus.

For example, in addition to an abnormal state, the step count of a female cow may be affected by other factors such as the weather and soil of the pasture area. For example, if it rains, female cows who dislike becoming wet, seek shelter from the rain under trees in the pasture area. When seeking shelter from the rain, the behavior range of the female cows is narrower compared to when the females cows are not seeking shelter from the rain. As a result, when it rains, the measured step count of a female cow decreases compared to when it is not raining.

A further characteristic is that ambulation of a cow is impeded by the soil such as when a female cow plants her foot and her foot sinks deeply into the soil. If the female cow loses her footing while walking such as when her foot sinks into the soil, the step count decreases compared to when the female cow is walking on firm soil. Further, when it rains in the pasture area, depending on the soil of the pasture area, mud is formed with the inclusion of rain water. Mud impedes the ambulation of the female cow by causing the legs of the cow to slip.

Therefore, the measured step count of a female cow varies not only consequent to estrus but also consequent to the effects of the weather and soil of the pasture area. As a result, the worker W may not be able to detect a female cow in estrus or may detect a female cow that is not in estrus to be in estrus. If the detection of a female cow in estrus is missed, this becomes a financial loss for the worker W and/or the manager of the farm F. If a female cow not in estrus is detected to be in estrus, worker goes to a female that does not require attending to, increasing the work load of the worker W.

Thus, if it rains on the farm F when the step count of the livestock animal A is measured, the step count correcting method of the present embodiment corrects the step count measured by the communications device 101, by adding the portion decreased consequent to the effects of the rain. As a result, the step count correcting method of the present embodiment suppresses variation of the step count of the livestock animal A consequent to the effects of the weather and increases the accuracy of detecting a cow in estrus from the step count.

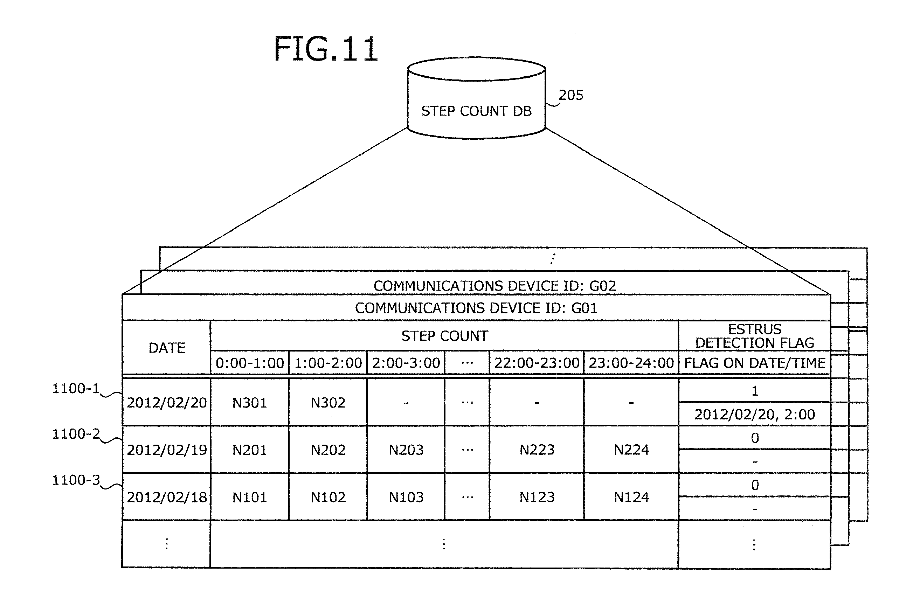

Hereinafter, an example of the step count correcting method of the embodiment will be described. In the embodiment, estrus will be taken as one example of an abnormal state of the livestock animal A. Further, in the present embodiment, the livestock animal A will be described as a female cow. Female cows have a characteristic in that the when in estrus, the female cow has a step count that increases per unit time compared to periods when not in estrus and this characteristic of female cows is used.
(1) The communications device 101 measures the step count of the livestock animal A and at given transmission intervals, transmits to the step count correcting apparatus 103, via a relay device 102 installed in the pasture area, measurement result information indicating measurement results of the step count of the livestock animal A. Here, as one example, the communications device 101 is assumed to transmit the measurement result information at a transmission interval of one hour.
(2) The step count correcting apparatus 103, via the relay device 102, receives the measurement result information transmitted by the communications device 101 and obtains the step count of the livestock animal A measured by the communications device 101. For example, here, as depicted in ( 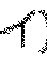 ) in FIG. 1, it is assumed to be raining on the farm F when the communications device 101 measures the step count of the livestock animal A. If it is raining on the farm F when the communications device 101 measures the step count of the livestock animal A, the step count correcting apparatus 103, as depicted in (□) in FIG. 1, performs a correction for the weather with respect to the measured step count of the livestock animal A and converts the step count into a step count for dry weather. A concrete correction example of correction for the weather will be described hereinafter with reference to FIG. 11.
(3) The step count correcting apparatus 103 transmits the corrected step count of the livestock animal A to the client apparatus 104. The client apparatus 104 displays on the display 105, images based on the corrected step count received from the step count correcting apparatus 103. From the display contents of the display 105, the worker W can know the corrected step count of the livestock animal A. Therefore, the worker W can know that variation consequent to the effects of the weather is a reduced step count of the livestock animal A, enabling the accuracy to be raised when detecting estrus from the step count of the livestock animal A.

As described above, if it rains on the farm F when the step count of the livestock animal A is measured, the step count correcting apparatus 103 performs a correction of adding to the step count measured by the communications device 101, the portion reduced by the effects of the rain. Consequently, the step count correcting apparatus 103 can suppress variation of the step count of the livestock animal A consequent to the effects of the weather and increase the accuracy in detecting a cow in estrus from the step count.

### (Example of system configuration of step count correcting system)

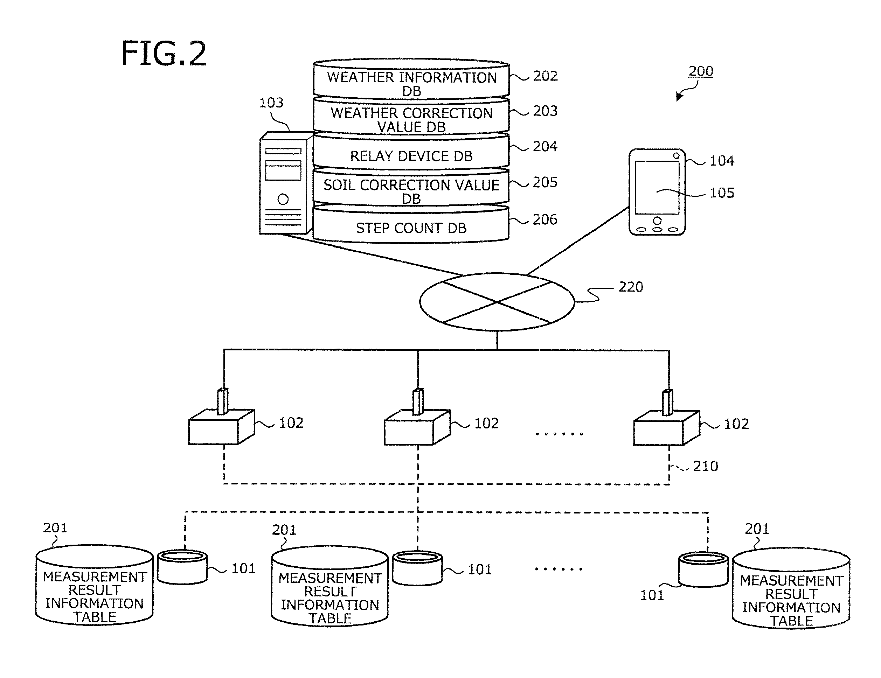

An example of system configuration of the step count correcting system of the present embodiment will be described. FIG. 2 is a diagram depicting an example of system configuration of the step count correcting system 200. In FIG. 2, the step count correcting system 200 includes the communications device 101 in singular or in plural, the relay device 102 in plural, and the step count correcting apparatus 103. In FIG. 2, although a case is depicted where the communications device 101 is provided in plural, a singular communications device 101 may be provided.

As depicted in FIG. 2, when the step count correcting system 200 has the communications device 101 in plural, each of the communications devices 101, when transmitting measurement result information, also transmits communications device identification information thereof. Here, communications device identification information is information that can identify one communications device 101 from among plural communications devices 101. For example, the communications device identification information is information representing a communications device ID specific to each communications device 101. Hereinafter, in the present embodiment, the communications device identification information will be referred to as simply, "communications device ID".

In the step count correcting system 200, the communications device 101 and the relay device 102 are connected through a wireless communications network 210. The communications device 101 and the relay device 102 each have a given range around the device 101, 102 (e.g., a range of a 150-meter radius around the device 101, 102), as a communications area in which communication through the wireless communications network 210 is possible. When having a positional relation enabling communication, the communications device 101 and the relay device 102 are connected by the wireless communications network 210. For example, near field communication such as radio frequency identification (RFID) is applicable as the wireless communications network 210.

Further, the relay device 102, the step count correcting apparatus 103, and the client apparatus 104 are connected via a network 220. For example, the network 220 is the Internet, a local area network (LAN), a wide area network (WAN), etc.

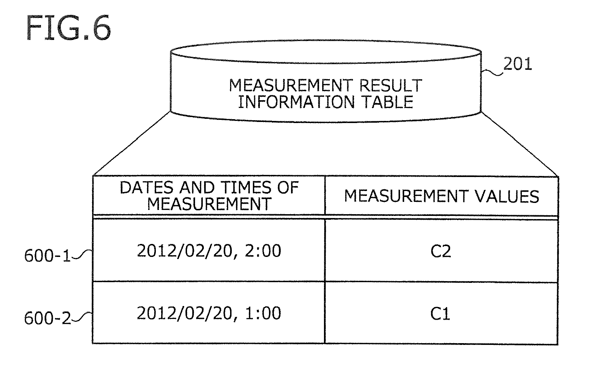

The communications device 101 has a measurement result information table 201 and is a portable computer attached to each livestock animal A raised on the farm F. The communications device 101 has a function of measuring the step count of the livestock animal A to which the communications device 101 is attached and a communications function through the wireless communications network 210. For example, a pedometer with an additional function of communication via the wireless communications network 210 is applicable as the communications device 101. Contents of the measurement result information table 201 will be described with reference to FIG. 6.

The relay device 102 is installed within the premises of the farm F and is a computer having a communications function via the wireless communications network 210 and a communications function via the network 220. The relay devices 102 are respectively installed at a different installation site.

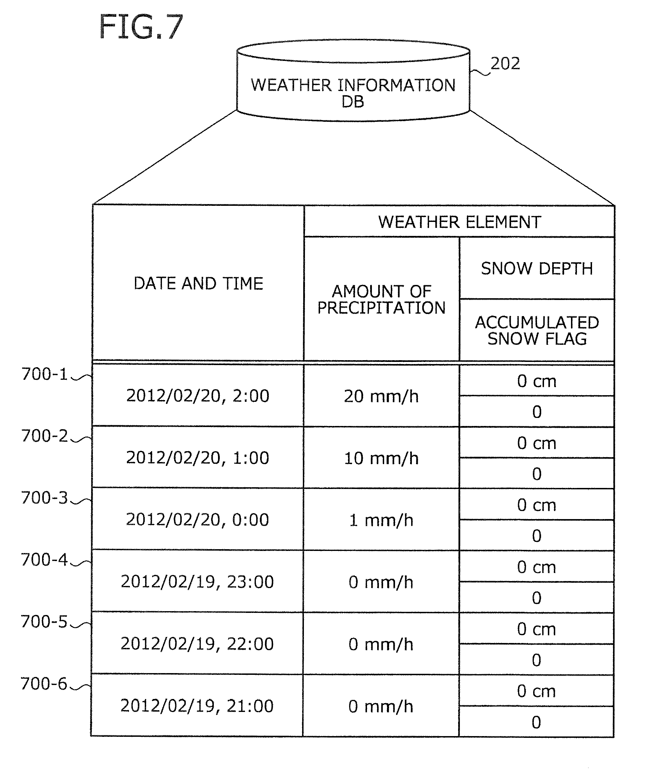

The step count correcting apparatus 103 has a weather information DB 202, a weather correction value DB 203, a relay device DB 204, a soil correction value DB 205, and a step count DB 206 and is a computer having a communications function via the network 220. For example, a server included in a cloud computing system, a personal computer (PC), note PC, etc. used by a manager of the farm F or the worker W are applicable as the step count correcting apparatus 103. Contents of the weather information DB 202, the weather correction value DB 203, the relay device DB 204, the soil correction value DB 205, and the step count DB 206 will be described with reference to FIGs. 7 to 11.

The client apparatus 104 is a computer having the display 105 that displays images based on various types of information, and a communications function via the network 220. For example, a PC or note PC, mobile telephone, smartphone, and the like used by the worker W of the farm F are applicable as the client apparatus 104.

### (Hardware configuration example of communications device)

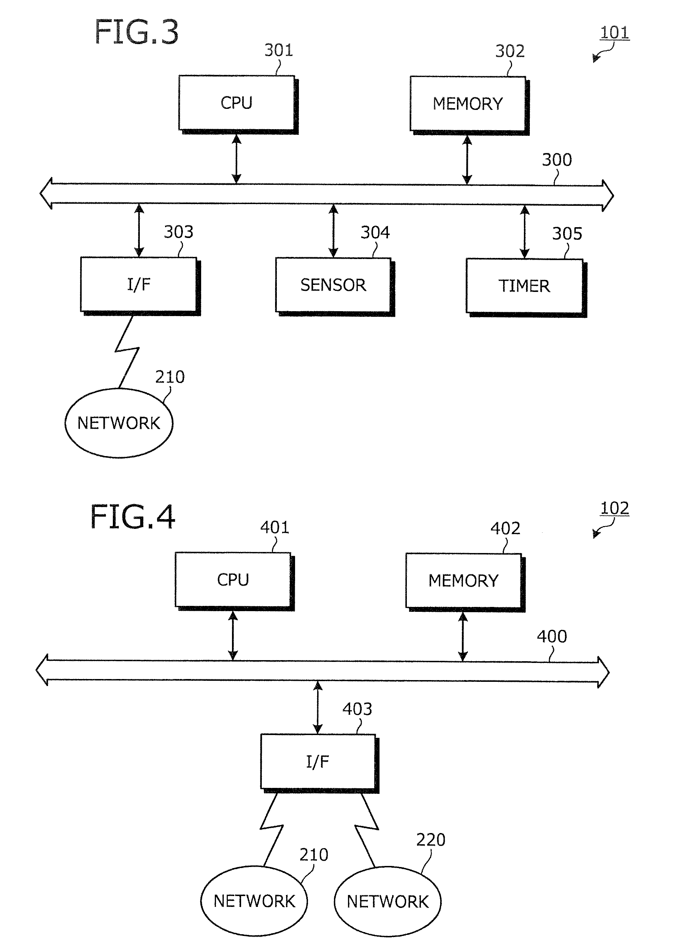

A hardware configuration example of the communications device 101 will be described. FIG. 3 is a block diagram depicting a hardware configuration example of the communications device of the present embodiment. In FIG. 3, the communications device 101 includes a central processing unit (CPU) 301, memory 302, an interface (I/F) 303, a sensor 304, and a timer 305, respectively connected by a bus 300.

Here, the CPU 301 governs overall control of the communications device 101. The memory 302 includes read-only memory (ROM), random access memory (RAM), and flash ROM. The ROM and the flash ROM, for example, store various types of programs such as a boot program. The RAM is used as a work area of the CPU 301.

The I/F 303 is connected to the wireless communications network 210 through a communications line and is connected to other apparatuses such as the relay devices 102, via the wireless communications network 210. The I/F 303 administers an internal interface with the wireless communications network 210 and controls the input and output of data from external apparatuses.

The sensor 304 outputs information for detecting behavior of the communications device 101. For example, when the sensor 304 is implemented by a gyroscope or a triaxial accelerometer and the communications device 101 accelerates the sensor 304 outputs information according to the acceleration. The timer 305 has a function of measuring time. For example, the timer 305 is implemented by a real time clock (RTC) and measures the actual time. Further, the timer 305 may measure the time that elapses from a given time point. Configuration may be such that the timer 305 is disposed external to the communications device 101 and the communications device 101 obtains the measurement results of the timer 305 through the wireless communications network 210.

### (Hardware configuration example of relay device)

A hardware configuration example of the relay device 102 will be described. FIG. 4 is a block diagram depicting a hardware configuration example of the relay device 102. In FIG. 4, the relay device 102 includes a CPU 401, memory 402, and an I/F 403, respectively connected by a bus 400.

Here, the CPU 401 governs overall control of the relay device 102. The memory 402 includes ROM, RAM, and flash ROM. The ROM and flash ROM, for example, store various types of programs such as a boot program. The RAM is used as a work area of the CPU 401.

The I/F 403 is connected to the wireless communications network 210 through a communications line and is connected to other apparatuses such as the communications device 101, via the wireless communications network 210. The I/F 403 is further connected to the network 220 through a communications line and through the network 220, is connected to other apparatuses such as the step count correcting apparatus 103. The I/F 403 administers an internal interface with the wireless communications network 210 and the network 220; and controls the input and output of data from external apparatuses.

### (Hardware configuration example of step count correcting apparatus and client apparatus)

A hardware configuration example of the step count correcting apparatus 103 and the client apparatus 104 will be described. Here, the step count correcting apparatus 103 and the client apparatus 104 will be indicated as simply "the step count correcting apparatus 103, etc.".

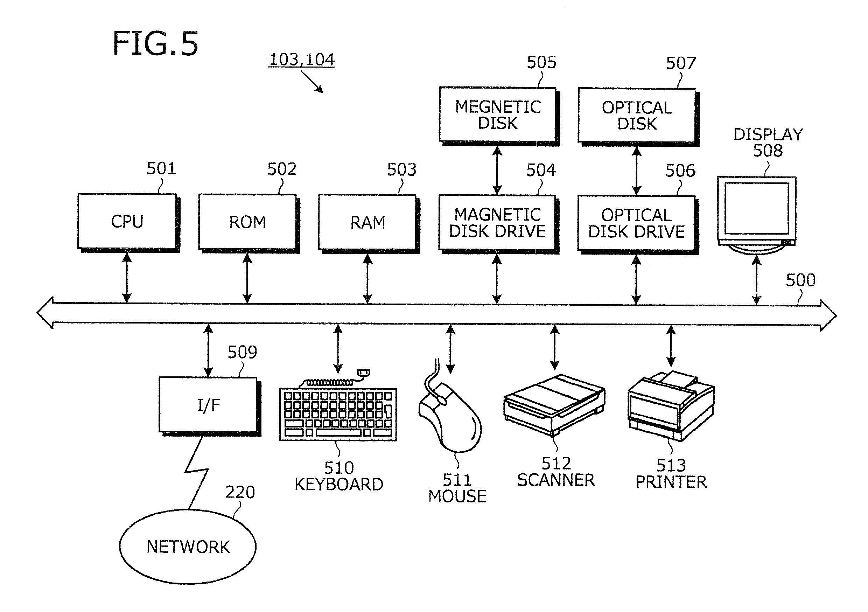

FIG. 5 is a block diagram depicting a hardware configuration example of the step count correcting apparatus 103, etc. In FIG. 5, the step count correcting apparatus 103, etc. include a CPU 501, ROM 502, RAM 503, a magnetic disk drive 504, a magnetic disk 505, an optical disk drive 506, an optical disk 507, a display 508, an I/F 509, a keyboard 510, a mouse 511, a scanner 512, and a printer 513, respectively connected by a bus 500.

Here, the CPU 501 governs overall control of the step count correcting apparatus 103, etc. The ROM 502 stores programs such as a boot program. The RAM 503 is used as a work area of the CPU 501. The magnetic disk drive 504, under the control of the CPU 501, controls the reading and writing of data with respect to the magnetic disk 505. The magnetic disk 505 stores data written thereto under the control of the magnetic disk drive 504.

The optical disk drive 506, under the control of the CPU 501, controls the reading and writing of data with respect to the optical disk 507. The optical disk 507 stores data written thereto under the control of the optical disk drive 506, the data being read out by a computer.

The display 508 displays documents, images, and functional information in addition to a cursor, icons, and toolboxes. A CRT, TFT liquid crystal display, plasma display, and the like may be employed as the display 508.

The I/F 509 is connected to the network 220 through a communications line, and is connected to other apparatuses such as the relay device 102, the client apparatus 104, and a server of a local weather monitoring system, via the network 220. The I/F 509 administers an internal interface with the network 220, and controls the input and output of data from external apparatuses. A modem, LAN adapter, etc. may be employed as the I/F 509.

The keyboard 510 has keys for inputting text, numerals, various instructions, etc. and inputs data. The keyboard 510 may be a touch panel input pad, a numeric pad, etc. The mouse 511 is used to move the cursor, select a range, move or change the size of a window, etc. As long as functions identical to a pointing device are provided, a trackball, a joy stick, and the like may be employed.

The scanner 512 optically reads images and takes in image data into the step count correcting apparatus 103. The scanner 512 may have an optical character reader (OCR) function. The printer 513 prints image data and document data. A laser printer or ink jet printer may be employed as the printer 513.

Further, for example, among the components described above, the step count correcting apparatus 103 may be configured to omit the optical disk drive 506, the optical disk 507, the display 508, the mouse 511, the scanner 512, and the printer 513. The client apparatus 104 may be configured to omit the optical disk drive 506, the optical disk 507, the mouse 511, the scanner 512, and the printer 513.

### (Example of information stored by communications device)

An example of the information stored by the communications device 101 will be described. As described above, the communications device 101 stores the measurement result information table 201. For example, the measurement result information table 201 is implemented by the memory 302 of the communications device 101.

### <Example of contents of measurement result information table>

FIG. 6 is a diagram depicting an example of the contents of the measurement result information table 201. In FIG. 6, the measurement result information table 201 has fields for dates and times of measurement, and measurement values. By setting information into these fields, measurement result information for each combination of a measurement value and the date and time of the measurement is stored as a record in the measurement result information table 201. In the example depicted in FIG. 6, records of measurement result information 600-1, 600-2 are stored in the measurement result information table 201.

Here, the date and time of measurement represents the date and time of past transmissions of measurement result information. In the case of the present embodiment, as one example, the date and time of measurement indicates the date and time of the two most recent transmissions of the measurement result information. The measurement value represents a past measurement value of the step count of the livestock animal A at the time of transmission of the measurement result information. In the case of the present embodiment, as one example, the measurement values of the step counts of the livestock animal A at the time of the two most recent transmissions of the measurement result information are indicated.

For example, the communications device 101 cumulates, as the current measurement value, the step count of the livestock animal A from the time when the measurement value is set to "0" until the current time. With each step that the livestock animal A takes, the communications device 101 momentarily accelerates. Upon detecting this acceleration via the sensor 304, the communications device 101 increments the current measurement value by "+1".

When the transmission time for the measurement result information arrives according to the measurement result of the timer 305, the communications device 101 stores measurement result information in which the current measurement value is correlated with the date and time of measurement for this transmission time. If the transmission time for the measurement result information is a one-hour interval, for example, transmission occurs on the hour.

For example, in FIG. 6, the measurement result information 600-1 indicates that the measurement value at 2:00 on 2012/02/20 is "C2". Here, "C2" is a positive integer. Upon storing the measurement result information to the measurement result information table 201, the communications device 101 transmits to the step count correcting apparatus 103, via the relay device 102, each record of measurement result information stored in the measurement result information table 201. In the example depicted in FIG. 6, the communications device 101 transmits the measurement result information 600-1, 600-2.

Each time the transmission time for the measurement result information arrives, the communications device 101 transmits the measurement value at the previous transmission and the measurement value at the current transmission, thereby enabling the step count correcting apparatus 103 to stably obtain measurement results for the communications device 101. For example, even if the step count correcting apparatus 103 cannot receive the measurement result information previously transmitted from the communications device 101, the step count correcting apparatus 103 can obtain the measurement value for the previous transmission at the current transmission time.

Although an example has been described where the communications device 101 stores measurement result information in which the two most recent transmission times and measurement value are correlated, configuration is not limited hereto. The communications device 101 may store three records of the measurement result information in which the three most recent transmission times and corresponding measurement values are correlated. For instance, in this case, in the example depicted in FIG. 6, a measurement value at "2012/2/20, 0:00" is stored. The communications device 101 may store three or more records of the measurement result information. The more measurement result information transmitted by the communications device 101 at one transmission, the more assuredly the step count correcting apparatus 103 can receive the measurement value for each transmission time.

### (Example of information stored by step count correcting apparatus)

Examples of the contents of the various DBs 202, 203, 204, 205, and 206 stored by the step count correcting apparatus 103 will be described. For example, in the description hereinafter, the various DBs 202, 203, 204, 205, and 206 are implemented by a memory apparatus such as the ROM 502, the RAM 503, the magnetic disk 505, and the optical disk 507 of the step count correcting apparatus 103.

### <Example of contents of weather information DB 202>

FIG. 7 is a diagram depicting an example of the contents of the weather information DB 202. As depicted in FIG. 7, the weather information DB 202 has fields for dates and times, and weather elements. By setting information into these fields, weather information for each combination a date and time, and weather element stored as a record in the weather information DB 202. In the example depicted in FIG. 7, records of the weather information 700-1 to 700-6 are stored in the weather information DB 202.

Here, a date and time indicate the date and time when the weather information is obtained. For example, each time the measurement result information transmitted by the communications device 101 is received, the step count correcting apparatus 103 obtains from an external apparatus, via the network 220, weather information that indicates for the date and time when the measurement result information is received, weather elements of a given area that includes the farm F measurement result information.

For example, via the network 220, the step count correcting apparatus 103 is connected to a server of a local weather monitoring system that distributes the weather information. The local weather monitoring system is connected to monitoring stations provided in local areas and collects measured values of the weather elements monitored by the monitoring station of each local area. The server of the local weather monitoring system distributes weather information requested by the step count correcting apparatus 103, when there is a request from the step count correcting apparatus 103, to obtain the weather information for a given area that includes the farm F. The step count correcting apparatus 103 receives the weather information distributed by the server of the local weather monitoring system.

In the case of the present embodiment, the step count correcting apparatus 103 obtains for each hour, on the hour, the weather information for a given area that includes the farm F and stores the weather information to the weather information DB 202. The weather information DB 202 stores the weather information for a past given period. For example, in the case of the present embodiment, the weather information DB 202 stores the weather information for the past six hours.

Here, a weather element represents a meteorological property. For example, the amount of precipitation, the amount of snowfall, the snow depth, the temperature, the hours of daylight, the wind velocity, etc. are examples of weather elements. In the case of the present embodiment, the weather element field has an amount of precipitation field that stores information indicating the amount of precipitation. Here, the amount of precipitation represents the volume of water that falls to the ground from the atmosphere. More specifically, the amount of precipitation can be obtained from the amount of rainfall and the amount of snowfall. For example, the "amount of precipitation 20mm/h" indicates that during one hour, rain or snow falls such that 20mm of water per unit area accumulates.

Further, in the case of the present embodiment, the weather element field has a snow depth field that stores information indicating the snow depth and an accumulated snow flag field that stores information indicating whether an accumulated snow flag is ON/OFF. Here, the snow depth indicates the height of snow accumulated on the ground. For example, the "snow depth 10cm" indicates a state where 10cm of snow has accumulated on the ground.

The accumulated snow flag indicates if the snow depth is a given value or more. In the case of the present embodiment, if the most recently obtained the snow depth is 30cm or more, the accumulated snow flag is set to ON. If the accumulated snow flag is set to ON, the accumulated snow flag field stores information representing "1". If the snow depth is less than 30cm, the accumulated snow flag is set to OFF and the accumulated snow flag field stores information representing "0".

For example, in FIG. 7, the weather information 700-1 indicates that at the time point "2012/02/20, 2:00", the weather in the given area that includes the farm F was rain for which the amount of precipitation was 20mm/h. Further, the weather information 700-1 indicates that at the time point "2012/02/20, 2:00", there was no accumulation of snow in the given area that includes the farm F.

### <Example of contents of weather correction value DB 203>

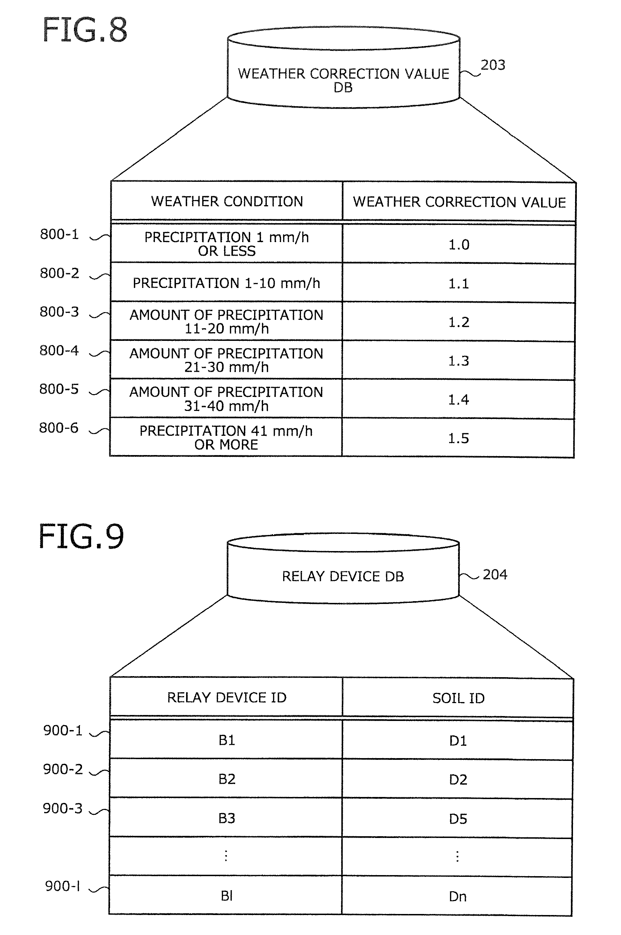

FIG. 8 is a diagram depicting an example of the contents of the weather correction value DB 203. As depicted in FIG. 8, the weather correction value DB 203 has fields for weather conditions and weather correction values. By setting information into these fields, weather correction value information for each combination of a weather condition and a weather correction value is stored as a record in the weather correction value DB 203. In the example depicted in FIG. 8, records of the weather correction value information 800-1 to 800-6 are stored in the weather correction value DB 203.

Here, a weather condition is a condition representing a weather state. The weather condition can be defined by the weather element. For example, in the case of the present embodiment, the weather condition is defined by the amount of precipitation and as depicted in FIG. 8, is an index value such as "amount of precipitation 1mm/h or less", "amount of precipitation 1 to 10mm/h", and "amount of precipitation 11 to 20mm/h".

A weather correction value represents a correction value used when correcting for the weather. The weather correction value may be preliminarily determined by the worker W, based on details of the respective weather conditions. For example, the step count correcting apparatus 103 multiples the uncorrected step count obtained from the measurement results of the communications device 101 by the weather correction value to calculate a corrected step count corrected for the weather.

Thus, when correction is performed by correcting for the weather such that the corrected step count becomes less than the uncorrected step count, the weather correction value is less than "1.0". On the other hand, when correction is performed such that the corrected step count becomes greater than the uncorrected step count, the weather correction value is a value greater than "1.0". Hereinafter, the uncorrected step count will be referred to as the "pre-correction step count" and the corrected step count will be referred to as the "post-correction step count".

For example, when it rains, the step count of the livestock animal A tends to decrease more than during dry weather. More specifically, the livestock animal A dislikes becoming wet, and when it rains, seeks shelter by moving to place to prevent from becoming wet such as under a tree. As a result, the behavior range of the livestock animal A narrows and the step count of the livestock animal A measured when it is raining decreases more than the step count of the livestock animal A measured during dry weather.

Therefore, in the case of rain, for example, the weather correction value when the amount of precipitation is "1mm/h" or more is a value greater than "1.0". In the example depicted in FIG. 8, the weather correction value for an "amount of precipitation 1mm/h or less" is "1.0"; and the weather correction value for an "amount of precipitation 1 to 10mm/h" is "1.1".

The greater the amount of precipitation, the more the step count of the livestock animal A tends to decrease and therefore, the greater the amount of precipitation, the greater the weather correction value is. In the example depicted in FIG. 8, the weather correction value for the "amount of precipitation 1 to 10mm/h" is greater than the weather correction value for the "amount of precipitation 1mm/h or less". The weather correction value for the "amount of precipitation 11 to 20mm/h" is greater than the weather correction value for the "amount of precipitation 1 to 10mm/h".

### <Example of contents of relay device DB 204>

FIG. 9 is a diagram depicting an example of the contents of the relay device DB 204. As depicted in FIG. 9, the relay device DB 204 has fields for relay device IDs and soil IDs. By storing information into these fields, installation position soil information for each combination of a relay device ID and a soil ID is stored as a record in the relay device DB 204. In example depicted in FIG. 9, records of the installation position soil information 900-1 to 900-1 are stored in the relay device DB 204.

Here, a relay device ID is information representing an identifier specific to each of the relay devices 102. A soil ID is information representing an identifier specific to the soil where each of the relay devices 102 is installed. For example, in FIG. 9, the installation position soil information 900-1 indicates that the soil in the vicinity of the installation position of the relay device 102 having the relay device ID "B1" is soil represented by the soil ID "D1".

### <Example of contents of soil correction value DB 205>

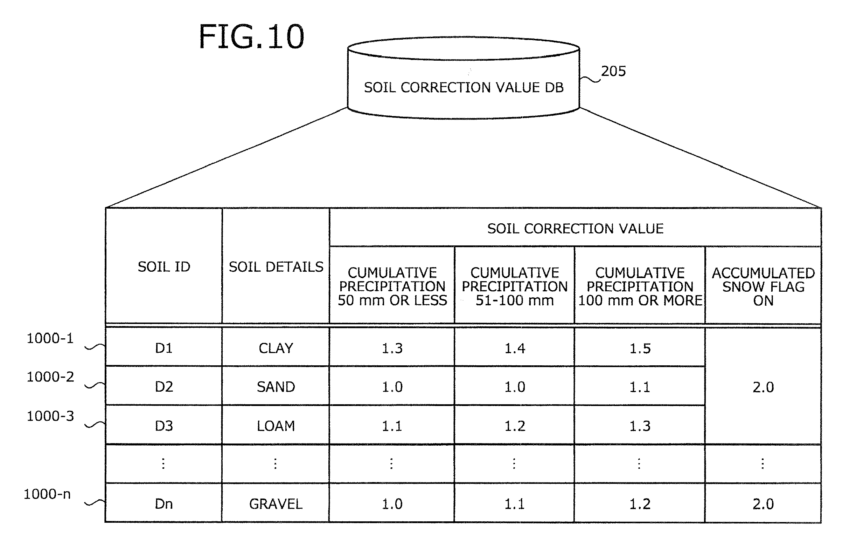

FIG. 10 is a diagram depicting an example of the contents of the soil correction value DB 205. As depicted in FIG. 10, the soil correction value DB 205 has fields for soil IDs and soil correction values. By setting information into these fields, soil correction value information for each combination of a soil ID and a soil correction value is stored as a record in the soil correction value DB 205. In the example depicted in FIG. 10, records of the soil correction value information 1000-1 to 1000-m are stored in the soil correction value DB 205. Further, in FIG. 10, for description, soil details are indicated.

Here, a soil ID represents an identifier specific to each soil type D1 to Dm. A soil correction value represents a correction value used when correcting for the soil. The soil correction values are preliminarily determined by the worker W, based on the details of each soil type D1 to Dm. For example, the step count correcting apparatus 103 multiplies the pre-correction step count by the soil correction value to calculate the post-correction step count corrected for the soil.

Therefore, when correction is performed for the soil such that the post-correction step count becomes less than the pre-correction step count, the soil correction value is a value less than "1.0". On the contrary, when correction is performed such that the post-correction step count becomes greater than the pre-correction step count, the soil correction value is a value greater than "1.0". For example, depending on the soil, the livestock animal A may lose its footing, making it difficult for the livestock animal A to walk. As a result, the step count of the livestock animal A may decrease. For soil having such a characteristic, the worker W sets the soil correction value to be a value greater than "1.0".

In the example depicted in FIG. 10, the soil correction value for the soil type D1, the soil details of which indicate "clay" is greater than the soil correction value for the soil type D2 "sand", indicating that "clay" has a greater impact on the ambulation of the livestock animal A than "sand" and has a characteristic of decreasing the step count of the livestock animal A.

Further, for each soil type D1 to Dm, the soil correction values may be set to a different value for each weather condition. For example, among the soil types D1 to Dm, some types have a characteristic of accumulating water easily while some types have a characteristic of not accumulating water easily. The more easily water accumulates, the more easily mud is formed when it rains. Mud impedes the ambulation of the female cow by causing the legs of the cow to slip. As a result, the more easily water accumulates, the more the step count of the livestock animal A decreases when it rains. Further, for example, the more easily mud is formed, the greater the soil correction value is set for the soil.

Further, the greater the amount of precipitation, the more water is included in the soil, increasing the amount of mud formed. As a result, the greater the amount of precipitation is, the more the step count of the livestock animal A decreases. Thus, the soil correction value is set to be greater, the greater the amount of precipitation is. Further, the soil retains the included water for a given period. More specifically, for example, after the rain stops, the mud of the soil does not immediately dry and if even light rain continues over a long period, a large amount of water becomes included in the soil, increasing the amount of mud formed. Thus, in the present embodiment, for each soil type, a soil correction value for each cumulative amount of precipitation is set. Here, the cumulative amount of precipitation is the cumulative amount of precipitation over a given period in the past.

For example, the amount of precipitation for the six most recent records of weather information stored in the weather information DB 202 are assumed to be x1mm/h, x2mm/h, x3mm/h, x4mm/h, x5mm/h, and x6mm/h. In this case, the step count correcting apparatus 103 calculates the cumulative amount of precipitation as "x1+x2+x3+x4+x5+x6"mm. Assuming the weather information depicted in FIG. 7 is stored in the weather information DB 202, then the cumulative amount of precipitation is "31mm".

### <Example of contents of step count DB 206>

FIG. 11 is a diagram depicting an example of the contents of the step count DB 206. In FIG. 11, the step count DB 206 has fields for dates, step counts, and estrus detection flags. By setting information into these fields, step count information for each combination of a date, a step count, and an estrus detection flag is stored as a record in the step count DB 206. In the example depicted in FIG. 11, records of the step count information 1100-1 to 1100-3 are stored in the step count DB 206.

Here, the date is the date on which the step count is measured, e.g., is information indicating the year/month/day that the step count was measured. The step count is information indicating the step count of the livestock animal A. Here, step count field has time slot fields. The step count DB 206 can store a step count of the livestock animal A for each time slot. In the example depicted in FIG. 11, time slot fields of one-hour intervals, e.g., "0:00-1:00", "1:00-2:00", etc. are prepared.

In each of the time slot fields, a value set as the step count of the livestock animal A is a value obtained by using a weather correction value and/or soil correction value to correct the measurement results measured for the respective time slots by the communications device 101. In other words, each of the time slot fields stores the post-correction step count described above. In the example depicted in FIG. 11, the time slot field "1:00-2:00" of "2012/02/20" stores N302, which is the post-correction step count obtained by correcting the pre-correction step count of the livestock animal A at "1:00-2:00" on "2012/02/20" for the weather and/or the soil.

### (Example of information stored to time slot fields by step count correcting apparatus 103)

An example of information stored to the time slot fields by the step count correcting apparatus 103 will be described. In the description hereinafter, the pre-correction step count calculated from the measurement value of the measurement result information received by the step count correcting apparatus 103 is assumed to be "X", weather correction value is assumed to be "k", and the soil correction value is assumed to be "d". Further, the post-correction step count calculated by correcting for the weather is assumed to be "Y"; and the post-correction step count calculated by correcting for the soil is assumed to be "Z".

The step count correcting apparatus 103 calculates based on the received measurement result information, a pre-correction step count of the livestock animal A for each time slot. For example, the received measurement result information is assumed to include information indicating that at the time point "2012/02/20, 2:00", the measurement value is "C2"; at the time point "2012/02/20, 1:00", the measurement value is "C1". C2 and C1 are positive integers. In this case, the step count correcting apparatus 103 calculates the pre-correction step count X=C2-C1 of the livestock animal A for the time slot "1:00-2:00" on "2012/02/20".

The step count correcting apparatus 103 obtains from the weather information DB 202, the weather information for the time point "2012/02/20, 2:00". For example, the weather information for "2012/02/20, 2:00" is assumed to indicate the "amount of precipitation 20mm/h". The step count correcting apparatus 103 identifies a weather correction value from the "amount of precipitation 20mm/h" and the weather condition of the weather correction value DB 203. The "amount of precipitation 20mm/h" is included in the "amount of precipitation 11 to 20mm/h" and therefore, the step count correcting apparatus 103 obtains "1.2" as the weather correction value.

Thus, the step count correcting apparatus 103 multiplies X calculated above and the weather correction value k for "amount of precipitation 11 to 20mm/h" to calculate the post-correction step count Y=Xxk corrected for the weather. As described above, here X=C2-C1, and k=1.2.

From the relay device ID of the relay device 102 that relayed the received measurement result information, the step count correcting apparatus 103 identifies the soil type on which the livestock animal A walked during the time slot "1:00-2:00" on "2012/02/20". For example, the relay device ID of the relay device 102 that relayed the measurement result information received by the step count correcting apparatus 103 at "2:00" on "2012/02/20" is assumed to be "B1". In the relay device DB 204, the soil ID "soil type D1" is correlated with the relay device ID "B1".

The step count correcting apparatus 103 calculates from the weather information stored in the weather information DB 202, the cumulative amount of precipitation, which is the amount of precipitation cumulated for the last six hours. In the example depicted in FIG. 7, the cumulative amount of precipitation is 31mm. The step count correcting apparatus 103, upon calculating the cumulative amount of precipitation, obtains a soil correction value using the identified soil type, the calculated cumulative amount of precipitation, and the soil correction value DB 205. In the case of the soil type D1 and the cumulative amount of precipitation 31mm, soil correction value d=1.3. The step count correcting apparatus 103 multiplies Y calculated above and the soil correction value d to calculate the post-correction step count Z=Yxd corrected for the soil. As described above, here, Y=Xxt, and d=1.3.

The step count correcting apparatus 103 stores the calculated value of Z to the time slot field "1:00-2:00" for "2012/02/20" in the step count DB 206. As described above, in the example depicted in FIG. 11, the time slot field "1:00-2:00" for "2012/02/20" stores N302. In this case, N302=Z=(C2-C1)x1.2x1.3.

The estrus detection flag field has an ON/OFF field that stores information indicating whether the estrus detection flag is ON or OFF. Here, as one example, if "1" is stored in the ON/OFF field, the estrus detection flag is indicated to be ON. On the other hand, if "0" is stored in the ON/OFF field, the estrus detection flag is indicated to be OFF. The estrus detection flag field further has a flag ON date/time field that stores information indicating the date and time when the estrus detection flag was turned ON.

For example, if the step counts of the livestock animal A stored in the time slot fields for the two most recent time slots in the step count DB 206 are respectively greater than or equal to a given threshold, the step count correcting apparatus 103 sets the estrus detection flags stored in the time slot fields for the two most recent time slots, to ON. For example, a different threshold for each time slot, such as a threshold for the step count of the livestock animal A during the time slot "0:00-1:00", and a threshold for the step count of the livestock animal A during the time slot "1:00-2:00", is defined for the step count correcting apparatus 103. Furthermore, the thresholds may be defined according to the abnormal state of the livestock animal A the worker W wants to find. For example, the thresholds may be defined stepwise, such that when the step count of the livestock animal A is less than a threshold Th1, illness is determined; when the step count of the livestock animal A is a threshold Th1 or greater and less than a threshold Th2, a normal state is determined; and if the step count of the livestock animal A is the threshold Th2 or greater, estrus is determined threshold.

The step count DB 206 has each of the fields above for each communications device ID and the step count DB 206 can store step count information for each communications device ID. The step count correcting apparatus 103 stores to the time slot field of the step count DB 206 that corresponds to the communications device ID received together with the measurement result information, the step count of the livestock animal A having the communications device 101 of the received communications device ID. In the example depicted in FIG. 11, step count information stored for the communications device 101 of the communications device ID "G01" is depicted.

Further, the step count correcting apparatus 103 has a correction value history table that stores at least the weather correction value used in the previous correction for the weather. For example, a correction value history table described hereinafter is implemented by a memory apparatus such as the RAM 503, the magnetic disk 505, and the optical disk 507 of the step count correcting apparatus 103.

### <Example of contents of correction value history table>

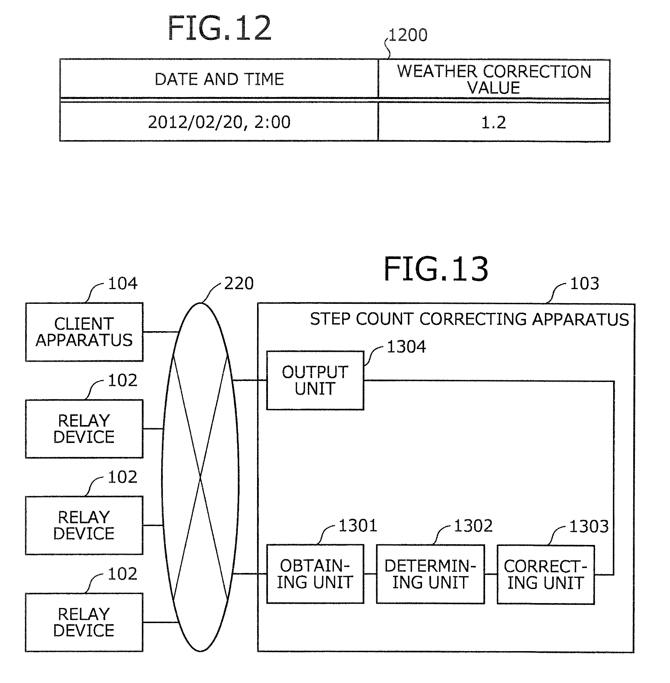

FIG. 12 is a diagram depicting an example of the contents of a correction value history table 1200. In FIG. 12, the correction value history table 1200 has fields for dates and times, weather correction values. By storing information into these fields, correction value history information for each combination of a date and time, and weather correction value is stored as a record in the correction value history table 1200. In the example depicted in FIG. 12, a record of the correction value history information 1200-1 is stored in the correction value history table 1200.

Here, the date and time are the date and time when correction for the weather is performed. For example, each time measurement result information transmitted by the communications device 101 is received, the step count correcting apparatus 103 performs correction for the weather and/or the soil and stores step count information into the step count DB 206. Thus, in the case of the present embodiment, the step count correcting apparatus 103 performs correction for the weather, every hour, on the hour and stores correction value history information to the correction value history table 1200.

For example, in FIG. 12, the correction value history information 1200-1 indicates that the weather correction value "1.2" was used in the correction for the weather at the time point "2012/02/20, 2:00". In the example depicted in FIG. 12, although the weather correction value alone is stored as correction history information, similar to the weather correction value, the soil correction value may be stored. Further, in FIG. 12, although an example is depicted where the correction value history information for the most recent correction, i.e., the last correction for the weather, is stored in the correction value history table 1200, configuration is not limited hereto. For example, correction value history information for a given number of the most recent corrections for the weather may be stored in the correction value history table 1200.

### (Functional configuration example step count correcting apparatus 103)

A functional configuration example of the step count correcting apparatus 103 will be described. FIG. 13 is a block diagram depicting a functional configuration example of the step count correcting apparatus 103. In FIG. 13, the step count correcting apparatus 103 includes an obtaining unit 1301, a determining unit 1302, a correcting unit 1303, and an output unit 1304. These functions forming a control unit, e.g., the obtaining unit 1301 to the output unit 1304, are implemented by executing on the CPU 501, a program stored on the magnetic disk 505 depicted in FIG. 5 or by the I/F 509 and the magnetic disk 505. Process results of the functional units are stored to the RAM 503, for example.

The obtaining unit 1301 has a function of obtaining measurement results of the step count of the livestock animal A, a report location and a report time of the measurement results of the step count of the livestock animal A, and weather information corresponding to the report location and the report time. For example, the obtaining unit 1301, via the network 220, receives the measurement result information from a relay device 102. As described above, the measurement result information includes information indicating the measurement value and the date and time of measurement of the step count of the livestock animal A.

The obtaining unit 1301 obtains the measurement results of the step count of the livestock animal A from the measurement value of the received measurement result information. In the example of the present embodiment, the obtaining unit 1301 subtracts the measurement value for the transmission time of the previous measurement result information, from the measurement value at the transmission time of the current measurement result information and thereby, obtains the measurement results of the step count of the livestock animal A.

The obtaining unit 1301 obtains the report time of the measurement results of the step count of the livestock animal A, from the date and time of measurement of the received measurement result information. In the example of the present embodiment, the obtaining unit 1301 obtains as the report time of the current measurement results of the step count of the livestock animal A, the date and time of measurement indicating the transmission time of the current measurement result information. Further, if the obtaining unit 1301 has a timer function enabling measurement of the actual time, the obtaining unit 1301, when receiving the measurement result information, may obtain the current time from the timer function as the report time. The obtaining unit 1301, when receiving the measurement result information, may access a given network time protocol (NTP) server, via the network 220, and obtain the current time as the report time.

The obtaining unit 1301 further receives a relay device ID when receiving the measurement result information. From the received relay device ID, the obtaining unit 1301, obtains the report location of the measurement results of the step count of the livestock animal A. In the example of the present embodiment, since the relay device 102 is installed on the farm F, the obtaining unit 1301 obtains as the report location of the measurement results of the step count of the livestock animal A, the address of the farm F and a given area that includes the farm F, which are preliminarily set. For example, the obtaining unit 1301 may refer to a table that correlates and stores the relay device ID of the relay device 102 and the installation position, to obtain, as the report location of the measurement results of the step count of the livestock animal A, the installation position corresponding to the received relay device ID.

If the step count correcting apparatus 103 is connected to the relay devices 102 of farms scattered among plural areas, the step count correcting apparatus 103 may have a database that stores information indicating on which farm each of the relay devices 102 is installed. In this case, from the received relay device ID, the obtaining unit 1301 identifies the relay device 102 and the farm on which the relay device 102 is installed. The obtaining unit 1301 can obtain the report location of the measurement results of the step count of the livestock animal A by obtaining from a map database stored by the step count correcting apparatus 103, the address of a designated farm, or obtaining the address from an external source through the network 220.

The obtaining unit 1301 obtains from the local weather monitoring system, via the network 220, weather information corresponding to the report location and the report time of measurement results of the step count of the livestock animal A. In the present embodiment, although the obtaining unit 1301 obtains the amount of precipitation as the weather information, as described above, the weather information may include information indicating the amount of snowfall, the snow depth, the temperature, the hours of daylight, the wind velocity, the wind direction, etc.

If the step count correcting apparatus 103 is connected to meteorological instrumentation such as a rain gauge installed on the farm F and the farms in other areas, the obtaining unit 1301 may obtain as the weather information, measurement results of the meteorological instrumentation installed on the farm identified from the received relay device ID, etc. The obtaining unit 1301, upon obtaining the weather information, stores the obtained weather information into the weather information DB 202.

The determining unit 1302 has a function of determining based on the weather information obtained by the obtaining unit 1301, whether measurement results of the step count of the livestock animal A require correction. For example, the determining unit 1302 determines that correction is required, if the weather element indicated by the weather information obtained by the obtaining unit 1301 satisfies a given condition. In the example of the present embodiment, the determining unit 1302 determines whether the amount of precipitation of the latest weather information stored in the weather information DB 202 coincides with a weather condition for rain in the weather correction value DB 203.

The correcting unit 1303 has a function of correcting measurement results of the step count of the livestock animal A, based on the weather information obtained by the obtaining unit 1301 and when correction is determined to be required by the determining unit 1302. For example, the correcting unit 1303 obtains the weather correction value correlated with the weather condition with which the amount of precipitation of the latest weather information stored in the weather information DB 202 coincides. The correcting unit 1303 multiplies the pre-correction step count based on the measurement results of the communications device 101 and the obtained weather correction value to correct for the weather. A concrete correction example of correction for the weather is described above.

In the example of the present embodiment, although the correcting unit 1303 multiplies the pre-correction step count based on the measurement results of the communications device 101 by a given correction value to perform correction, configuration is not limited hereto. For example, a given equation to be used for the correction may be prepared and the correcting unit 1303 may substitute into the prepared equation, as parameters, the pre-correction step count and the weather element indicated by the weather information to thereby, calculate the post-correction step count.

The output unit 1304 has a function of outputting the measurement results of the step count of the livestock animal A after correction by the correcting unit 1303. For example, the output unit 1304 transmits to the client apparatus 104, via the network 220, the post-correction step count corrected by the correcting unit 1303. As a result, the step count correcting apparatus 103 can notify the worker W of the post-correction step count.

The obtaining unit 1301 may obtain soil information that corresponds to the report location of the measurement results of the step count of the livestock animal A. For example, the obtaining unit 1301 uses the received relay device ID to obtain from the relay device DB 204, the soil ID correlated with the relay device ID that coincides with the received relay device ID. The correcting unit 1303 obtains from the soil correction value DB 205, the soil correction value correlated with the soil ID that coincides with the obtained soil ID.

The correcting unit 1303 multiplies the post-correction step count calculated to correct for the weather and the obtained soil correction value and thereby, corrects for the soil. A concrete correction example of correction for the soil is described above. Further, as in the present embodiment, when the soil correction value changes consequent to the weather, the correcting unit 1303 may use the soil ID and the weather information to obtain a soil correction value and correct for the soil, using the obtained soil correction value. The correcting unit 1303 may correct for the soil without correcting for the weather. In this case, the correcting unit 1303 multiplies the pre-correction step count based on the measurement results of the communications device 101 and the obtained soil correction value to thereby correct for the soil.

### (Example of display by client apparatus 104)

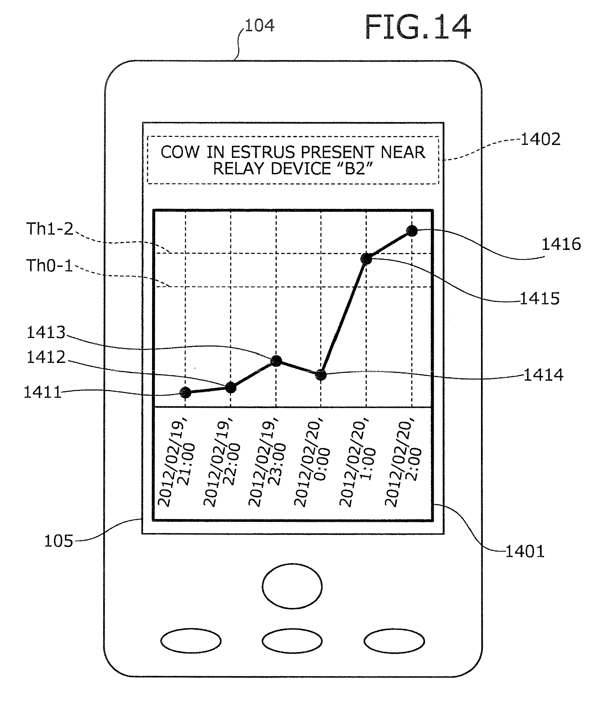

An example of display by the client apparatus 104 will be described. FIG. 14 is a diagram depicting an example of display by the client apparatus 104. As described above, the client apparatus 104 receives the post-correction step count from the step count correcting apparatus 103. Upon receiving the post-correction step count from the client apparatus 104, the step count correcting apparatus 103 stores information indicating the received post-correction step count. For example, at the time of a display request by the worker W or at the time when the post-correction step count is received, the client apparatus 104 displays on the display 105, an image based in the information indicating the stored post-correction step count.

As depicted in FIG. 14, the client apparatus 104 displays a step count transition image 1401 representing transition of the step count of the livestock animal A over a given period. In the example depicted in FIG. 14, the client apparatus 104 displays the step count transition image 1401 representing the transition of the step count of the livestock animal A over a six-hour period from "21:00" on "2012/02/19" until "2:00" on "2012/02/20".

The step count correcting apparatus 103 receives measurement result information every hour, on the hour, calculates the post-correction step count, and transmits the post-correction step count to the client apparatus 104. The client apparatus 104 receives hourly from the step count correcting apparatus 103, information representing the step count of the livestock animal A and stores the received information.

In FIG. 14, a plot 1411 is a plot representing the step count of the livestock animal A received from the step count correcting apparatus 103 at "21:00" on "2012/02/19". A plot 1412 represents the step count of the livestock animal A received from the step count correcting apparatus 103 at "22:00" on the same date as the plot 1411. A plot 1413 represents the step count of the livestock animal A received from the step count correcting apparatus 103 at "23:00" on the same date as the plot 1411.

A plot 1414 represents the step count of the livestock animal A received from the step count correcting apparatus 103 at "0:00" on "2012/02/20". A plot 1415 represents the step count of the livestock animal A received from the step count correcting apparatus 103 at "1:00" on the same date as the plot 1414. A plot 1416 represents the step count of the livestock animal A received from the step count correcting apparatus 103 at "2:00" on the same date as the plot 1414. The client apparatus 104 displays on the display 105, the step count transition image 1201 that includes an image in which the plots 1211 to 1216 are connected by a line.

Here, for example, the step count of the livestock animal A represented by the plot 1415 is a value that is higher than a threshold Th0-1 set for the step count for the time slot from 0:00 to 1:00. Further, the step count of the livestock animal A represented by the plot 1416 is higher than a threshold Th1-2 set for the step count for the time slot from 1:00 to 2:00.

When the step counts of the two most recent time slots respectively are greater than or equal to a threshold, the step count correcting apparatus 103 notifies the client apparatus 104 that the livestock animal A has entered estrus. The client apparatus 104 receives the notification and displays on the display 105, a message 1402 pointing to the livestock animal A that has entered estrus. When giving notification of the livestock animal A in estrus, the step count correcting apparatus 103 may further transmit the relay device ID of the relay device 102 that relayed the measurement information transmitted by the communications device 101 attached to the livestock animal A. Upon receiving the relay device ID from the step count correcting apparatus 103, the client apparatus 104, by the message 1402, notifies the worker W of the received relay device ID as the relay device 102 near the livestock animal A.

### (Example of process performed by communications device 101)

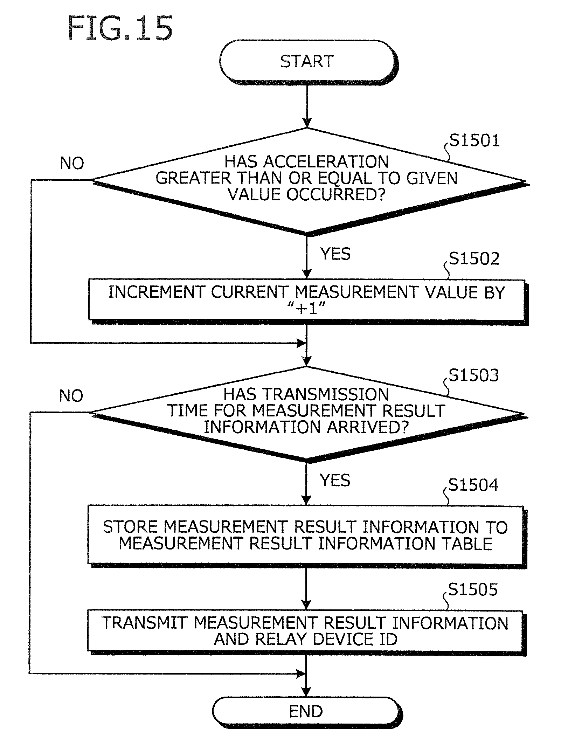

An example of a process performed by the communications device 101 will be described. FIG. 15 is a flowchart depicting an example of a process performed by the communications device 101. In FIG. 15, the communications device 101 determines from the output value of the sensor 304, whether acceleration of the communications device 101, greater than or equal to a given value has occurred (step S1501). If acceleration greater than or equal to the given value has not occurred (step S1501: NO), the communications device 101 transitions to the operation at step S1503.

If acceleration greater than or equal to the given value has occurred (step S1501: YES), the communications device 101 increments the current measurement value by "+1" (step S1502). Consequent to the operation at step S1502, the communications device 101 can cumulate the measurement value by incrementing the current measurement value by +1 each time the communications device 101 accelerates consequent to ambulation of the livestock animal A.

The communications device 101 determines from measurement results of the timer 305, whether the transmission time for the measurement result information has arrived (step S1503). For example, at step S1503, the communications device 101 determines that the transmission time for the measurement result information has arrived when the time measured by the timer 305 indicates each hour, on the hour. If the transmission time for the measurement result information has not arrived (step S1503: NO), the communications device 101 ends the series of operations according to the present flowchart.

If the transmission time for the measurement result information has arrived (step S1503: YES), the communications device 101 stores the measurement result information to the measurement result information table 201 (step S1504). For example, at step S1504, the communications device 101 stores to the measurement result information table 201, measurement result information in which the date and time at which the current measurement result information was transmitted and the current measurement value are correlated. Consequent to the operation at step S1504, the communications device 101 can store a measurement value each time measurement result information is transmitted.

The communications device 101 transmits to the relay device 102, each record of measurement result information stored in the measurement result information table 201 and the communications device ID thereof (step S1505), and ends the series of operations according to the present flowchart. Consequent to the operation at step S1505, the communications device 101 can transmit measurement result information at a given transmission interval. Further, consequent to the operation at step S1505, the communications device 101 can transmit not only the measurement value for the current transmission time of the measurement result information, but also the measurement values for past transmissions of the measurement result information.

As described above, the relay device 102, upon receiving the measurement result information and communications device ID transmitted from the communications device 101, transmits the received measurement result information and communications device ID, and the relay device ID thereof, to the step count correcting apparatus 103, via the network 220. Thus, the step count correcting apparatus 103 can obtain the measurement result information, the communications device ID, and the relay device ID, via the relay device 102.

The communications device 101 may reset the current measurement value to "0" at a given timing. For example, the communications device 101 sets the current measurement value to "0" at a given time, such as every hour, on the hour. The communications device 101 may set the current measurement value to "0", if an instruction to set the current measurement value to "0" is received from the step count correcting apparatus 103, via the relay device 102.

### (Example of process performed by step count correcting apparatus 103)

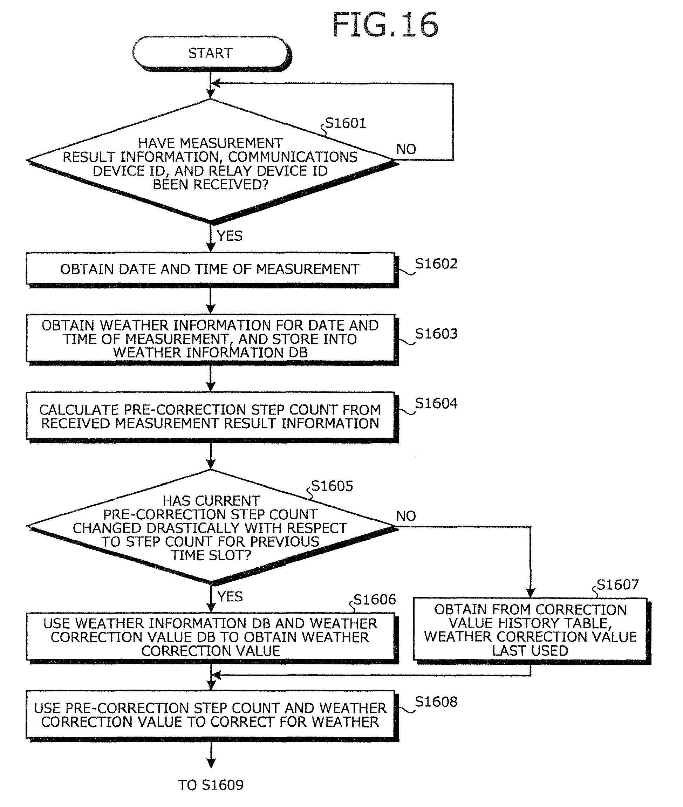

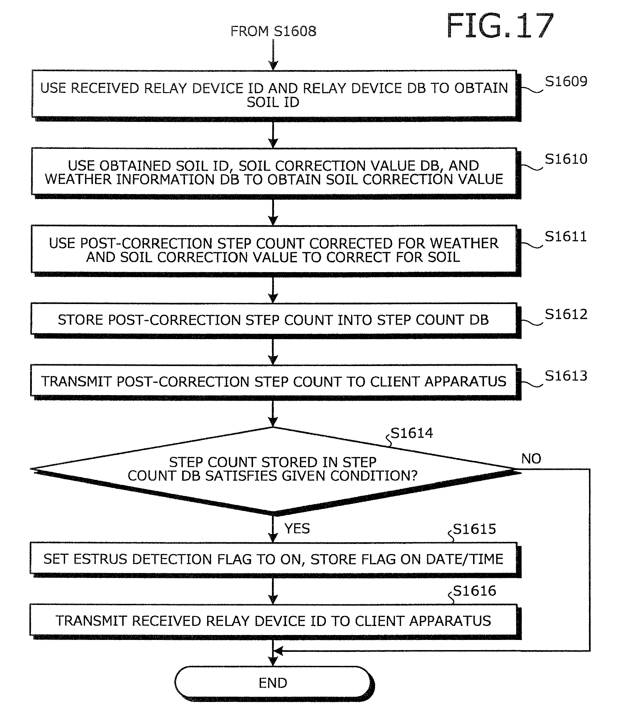

An example of a process performed by the step count correcting apparatus 103 will be described. FIG. 16 is a flowchart (part 1) depicting an example of a process performed by the step count correcting apparatus 103. FIG. 17 is a flowchart (part 2) depicting the example of the process performed by the step count correcting apparatus 103. As depicted in FIG. 16, the step count correcting apparatus 103 determines whether measurement result information, a communications device ID, and a relay device ID have been received (step S1601). The step count correcting apparatus 103 stands by until measurement result information, a communications device ID, and a relay device ID are received (step S1601: NO).

When measurement result information, a communications device ID, and a relay device ID have been received (step S1601: YES), the step count correcting apparatus 103 obtains the date and time of measurement from the received measurement result information (step S1602). Via the network 220, the step count correcting apparatus 103 obtains from an external apparatus and stores into the weather information DB 202, weather information that is for the date and time of measurement obtained at step S1601 and for the given area that includes the farm F (step S1603).

Based on the received measurement result information, the step count correcting apparatus 103 subtracts the measurement value for the previous transmission time from the measurement value for the current transmission time to calculate the pre-correction step count of the livestock animal A (step S1604).

The step count correcting apparatus 103 determines whether the pre-correction step count calculated at step S1604 has changed drastically with respect to the step count of the livestock animal A stored in the step count DB 206, for the previous time slot (step S1605). At step S1605, for example, the step count correcting apparatus 103 determines if the absolute value of the value obtained by subtracting the current pre-correction step count from the step count of the livestock animal A is greater than or equal to a given value. If the absolute value is greater than or equal to the given value, the step count correcting apparatus 103 determines that the pre-correction step count has drastically changed. Here, the given value can be arbitrarily defined by the worker W, according to the structure of the farm F.

If the previous step count of the livestock animal A and the current pre-correction step count have drastically changed (step S1605: YES), the step count correcting apparatus 103 uses the weather information stored in the weather information DB 202 and the weather correction value DB 203 to obtain a weather correction value (step S1606). At step S1606, the step count correcting apparatus 103 determines whether the amount of precipitation indicated in the weather information last obtained coincides with a weather condition in the weather correction value DB 203 and obtains the weather correction value correlated with coinciding weather condition. Consequent to the operation at step S1606, the step count correcting apparatus 103 can obtain for the weather on the farm F at the time of measurement of the step count of the livestock animal A, a weather condition value.

On the other hand, if the previous step count of the livestock animal A and the current pre-correction step count do not change drastically (step S1605: NO), the step count correcting apparatus 103 refers to the correction value history table 1200 to obtain the weather correction value last used to correct for the weather (step S1607). Consequent to the operation at step S1607, when the weather at the time of measurement of the previous step count of the livestock animal A and the weather at the time of measurement of the current step count of the livestock animal A have not change greatly, the step count correcting apparatus 103 can facilitate a reduction of the operations required to obtain a weather condition value.

Further, at step S1605, the step count correcting apparatus 103 may determine whether correction for the weather is required. For example, in the present embodiment, when the obtained weather correction value is "1.0", the step count correcting apparatus 103 determines that correction for the weather is not required; and when the weather correction value is a value other than "1.0", the step count correction apparatus 103 determines that correction for the weather is required. In this case, the step count correcting apparatus 103 transitions to the operation at step S1606 upon determining that correction for the weather is required; and transitions to the operation at step S1609 upon determining that correction for the weather is not required. As a result, the step count correcting apparatus 103 can facilitate reduction of the operations when correction is not required for the weather at the time of measurement of the step count of the livestock animal A.

The step count correcting apparatus 103 uses the pre-correction step count calculated at step S1604 and the weather correction value obtained at step S1606 or step S1607 to correct for the weather and calculate the post-correction step count (step S1608). At step S1608, the step count correcting apparatus 103 obtains as the post-correction step count corrected for the weather, a value calculated by multiplying the pre-correction step count and the weather correction value. Consequent to the operation at step S1608, the step count correcting apparatus 103 can convert the measured step count of the livestock animal A into a step count for standardized weather. For example, the step count correcting apparatus 103 can convert the step count of the livestock animal A measured during rain into a step count when the weather is sunny or cloudy.

As depicted in FIG. 17, the step count correcting apparatus 103 uses the relay device ID received at step S1601 and the relay device DB 204 to obtain a soil ID (step S1609). At step S1609, the step count correcting apparatus 103 obtains the soil ID that is correlated with the relay device ID that coincides with the received relay device ID. Consequent to the operation at step S1609, the step count correcting apparatus 103 can identify the soil in the vicinity of where the livestock animal A is pastured.

The step count correcting apparatus 103 uses the soil ID obtained at step S1609, the soil correction value DB 205, and the weather information DB 202 to obtain a soil correction value (step S1610). For example, at step S1610, the step count correcting apparatus 103 calculates the cumulative amount of precipitation for past six hours from the weather information stored in the weather information DB 202. The step count correcting apparatus 103 identifies for the soil correction value correlated with the soil ID that coincides with the received soil ID, soil correction values for each cumulative amount of precipitation. From among the identified soil correction values for each cumulative amount of precipitation, the step count correcting apparatus 103 obtains the soil correction value that corresponds to the cumulative amount of precipitation that includes the calculated cumulative amount of precipitation. Consequent to the operation at step S1610, the step count correcting apparatus 103 can obtain for each soil type and for the amount of precipitation, a soil correction value.

Further, at step S1610, if the accumulated snow flag in the weather information DB 202 is set to ON, the step count correcting apparatus 103 obtains the soil correction value correlated with accumulated snow in the soil correction value DB 205. As described above, the accumulated snow flag is set to ON when the snow depth is a given level or greater. If the accumulated snow flag is ON, the accumulation of snow can be thought to affect ambulation of the livestock animal A to a greater extent than the soil.

The step count correcting apparatus 103 uses the post-correction step count calculated at step S1608 and the soil correction value obtained at step S1610 to correct for the soil. The step count correcting apparatus 103 calculates the post-correction step count (step S1611). The step count correcting apparatus 103 multiplies the post-correction step count calculated at step S1608 and the soil correction value to obtain the post-correction step count corrected for the soil. Consequent to the operation at step S1611, the step count correcting apparatus 103 can convert the measured step count of the livestock animal A into a step count for standardized soil. For example, the step count correcting apparatus 103 can convert the step count of the livestock animal A measured in muddy soil into a step count for soil that is not muddy.

The step count correcting apparatus 103 stores the post-correction step count calculated at step S1611, into the step count DB 206, as the step count of the livestock animal A (step S1612). At step S1612, in the step count DB 206, the step count correcting apparatus 103 stores the calculated post-correction step count into the time slot field identified by the received communications device ID and measurement result information. Consequent to the operation at step S1612, the step count correcting apparatus 103 can store the post-correction step count, as the step count of the livestock animal A, into the step count DB 206.

The step count correcting apparatus 103 transmits information indicating the post-correction step count calculated at step S1612, to the client apparatus 104 of the worker W (step S1613). Consequent to the operation at step S1613, the step count correcting apparatus 103 can transmit the post-correction step count to the client apparatus 104 and notify the worker W of the post-correction step count, as the step count of the livestock animal A.

The step count correcting apparatus 103 determines whether the step count of the livestock animal A stored in the step count DB 206 satisfies a given condition (step S1614). For example, at step S1614, the step count correcting apparatus 103 determines that the given condition is satisfied if among the step counts of the livestock animal A stored in the step count DB 206, the step counts for the two most recent time slots are respectively greater than or equal to a threshold. Nonetheless, configuration is not limited hereto and for example, the given condition can be defined arbitrarily by the abnormal state of the livestock animal A the worker W wants to find. Consequent to the operation at step S1614, the step count correcting apparatus 103 can determine whether an abnormal state of the livestock animal A has occurred.

If the given condition is not satisfied (step S1614: NO), the step count correcting apparatus 103 ends the series of operations according to the present flowchart. If the step count of the livestock animal A stored in the step count DB 206 satisfies the given condition (step S1614: YES), the step count correcting apparatus 103 sets the estrus detection flag in the step count DB 206, to ON (step S1615). When setting the estrus detection flag to ON, the step count correcting apparatus 103 stores the flag ON date/time. Consequent to the operation at step S1615, the step count correcting apparatus 103 can store information indicating detection of an abnormal state of the livestock animal A as well as the date and time of the detection of the abnormal state.

The step count correcting apparatus 103 transmits information indicating detection of an abnormal state of the livestock animal A to the client apparatus 104 of the worker W (step S1616), and ends the series of operations according to the present flowchart. Consequent to the operation at step S1616, the step count correcting apparatus 103 can notify the worker W that an abnormal state of the livestock animal A has been detected. From the notification from the step count correcting apparatus 103, the worker W can know that a livestock animal A in an abnormal state is present. Therefore, the step count correcting apparatus 103 can reduce the work load of the worker W when searching for the livestock animal A.

Further, before step S1611, the step count correcting apparatus 103 may determine whether correction by the soil is required. For example, in the present embodiment, when the obtained soil correction value is "1.0", the step count correcting apparatus 103 determines that correction for the soil is not required; and when the soil correction value is a value other than "1.0", the step count correcting apparatus 103 determines that correction for the soil is required. In this case, the step count correcting apparatus 103 transitions to the operation at step S1611 upon determining that correction for the soil is required; and transitions to the operation at step S1612 upon determining that correction for the soil is not required. Thus, the step count correcting apparatus 103 can facilitate reduction of the operations if the soil when the step count of the livestock animal A is measured is soil that does not require correction.

As described above, the step count correcting apparatus 103 of the present embodiment can convert the step count into a step count for standardized weather by correcting the measured step count of the livestock animal A for the weather. Thus, the step count correcting apparatus 103 can reduce variation of the step count of the livestock animal A resulting from the effects of the weather. Therefore, the step count correcting apparatus 103 can suppress variation of the step count resulting from the effects of the weather, and increase the accuracy of detection when detecting a livestock animal A in an abnormal state, from the step count of the livestock animal A.

The step count correcting apparatus 103 of the present embodiment can convert the measured step count of the livestock animal A into a step count for standardized soil, by correcting for the soil. Thus, the step count correcting apparatus 103 can reduce variation of the step count of the livestock animal A resulting from the effects of the soil. Therefore, the step count correcting apparatus 103 can suppress variation of the step count consequent to the soil and increase the accuracy of detection when detecting a livestock animal A in an abnormal state, from the step count of the livestock animal A.

The step count correcting apparatus 103, for each soil type, stores a soil correction value for each the amount of precipitation and can perform correction suited for soil characteristics that change according to the amount of precipitation. Therefore, the step count correcting apparatus 10 can further reduce the variation of the step count of the livestock animal A resulting from the effects of the soil, and can further increase the accuracy of detection when detecting a livestock animal A in an abnormal state, from the step count of the livestock animal A.

In the example described in the present embodiment, although the step count correcting apparatus 103 has been described to correct the measured step count of the livestock animal A for both the weather and the soil, the step count correcting apparatus 103 may correct for either one among the weather and the soil. The step count correcting apparatus 103 can reduce the variation of the step count of the livestock animal A resulting from the effects of the weather or the soil, by performing correction for at least any one among the weather and the soil. Therefore, the step count correcting apparatus 103 can increase the accuracy of detection when detecting an abnormal state of a livestock animal A from the step count of the livestock animal A.

Further, in the present embodiment, although a weather correction value of "1.0" or more is set for the weather condition "the amount of precipitation 1mm/h or greater" and the measured step count of the livestock animal A is converted into a step count for sunny or cloudy weather, configuration is not limited hereto. For example, in areas that throughout the year, receive the most rain, taking a step count for rain as a standard, the step count of the livestock animal A measured during sunny or cloudy weather may be multiplied by a weather correction value of less than "1.0".

Further, although a technique of attaching a communications apparatus equipped with a GPS function to the livestock animal A may be considered, attaching a communications apparatus equipped with a GPS function to each livestock animal A has a high cost. Furthermore, the GPS function continuously emits an electronic signal and therefore, the consumption of the battery, which is driving source, is fast, requiring frequent replacement of the battery or the communications apparatus itself. Consequently, this technique not only has a high initial cost but also places a burden on the worker W in terms of battery or apparatus replacement.

On the contrary, the step count correcting apparatus 103 identifies the area in which the livestock animal A is pastured, based on the relay device ID of the relay device 102 that relayed the measurement information transmitted from the communications device 101 and therefore, can reduce the initial cost as well as the work load of the worker W, for battery replacement.

In the present embodiment, although an example is described where the weather correction values are stored in the weather correction value DB 203 and the soil correction values are stored the soil correction value DB 205, configuration is not limited hereto. For example, in a correction value DB, the step count correcting apparatus 103 may store for each weather type and for each soil type, both a weather correction value and a soil correction value of the present embodiment. In this case, the step count correcting apparatus 103 uses the weather information and the installation position soil information to identify in the correction value DB, one correction value and multiplies the pre-correction step count by the identified correction value, enabling correction for the weather and correction for the soil to be performed by one calculation.

The step count correcting method described in the present embodiment may be implemented by executing a prepared program on a computer such as a personal computer and a workstation. The program is stored on a computer-readable recording medium such as a hard disk, a flexible disk, a CD-ROM, an MO, and a DVD, read out from the computer-readable medium, and executed by the computer. The program may be distributed through a network such as the Internet.

### EXPLANATIONS OF LETTERS OR NUMERALS

- 101: communications device
- 102: relay device
- 103: step count correcting apparatus
- 104: client apparatus

## Claims

1. A step count correcting method executed by a computer that corrects a step count measurement result from a step counting device attached to a livestock animal, the step count correcting method comprising:
obtaining the step count measurement result of the livestock animal, a report location and a report time of the step count measurement result, and weather information that corresponds to the report location and the report time;
determining based on the weather information, whether correction of the step count measurement result is required;
correcting the step count measurement result based on the weather information, when the correction of the step count measurement result is determined to be required; and
outputting the corrected step count measurement result.

2. The step count correcting method according to claim 1, wherein
the obtaining includes obtaining soil information that is corresponds to the report location, and
the correcting includes correcting the step count measurement result based on the weather information and the soil information, when the correction of the step count measurement result is determined to be required.

3. A step count correcting method executed by a computer that corrects a step count measurement result from a step counting device attached to a livestock animal, the step count correcting method comprising:
obtaining the step count measurement result of the livestock animal, a report location of the step count measurement result, and soil information that corresponds to the report location;
determining based on the soil information, whether correction of the step count measurement result is required;
correcting the step count measurement result based on the soil information, when the correction of step count measurement result is determined to be required; and
outputting the corrected step count measurement result.

4. A step count correcting apparatus that corrects a step count measurement result from a step counting device attached to a livestock animal the step count correcting apparatus comprising:
an obtaining unit that obtains the step count measurement result of the livestock animal, a report location and a report time of the step count measurement result, and weather information that corresponds to the report location and the report time;
a determining unit that determines based on the weather information, whether correction of the step count measurement result is required;
a correcting unit that corrects the step count measurement result based on the weather information, when the correction of the step count measurement result is determined to be required by the determining unit; and
an output unit that outputs the step count measurement result corrected by the correcting unit.

5. A step count correcting program executed by a computer that corrects a step count measurement result from a step counting device attached to a livestock animal, the step count correcting program causing the computer to execute a process comprising:
obtaining the step count measurement result of the livestock animal, a report location and a report time of the step count measurement result, and weather information that corresponds to the report location and the report time;
determining based on the weather information, whether correction of the step count measurement result is required;
correcting the step count measurement result based on the weather information, when the correction of the step count measurement result is determined to be required;
outputting the corrected step count measurement result.

6. An estrus notifying method executed by a computer that determines estrus based on a step count measurement result from a step counting device attached to a livestock animal, the estrus notifying method comprising:
obtaining the step count measurement result of the livestock animal, a report location and a report time of the step count measurement result, and weather information that corresponds to the report location and the report time;
determining based on the weather information, whether correction of the step count measurement result is required, and determining based on a result of determining whether the correction is required and the step count measurement result, estrus of the livestock animal; and
outputting identification information of the livestock animal determined to be in estrus.

7. An estrus notifying apparatus livestock that determines estrus based on a step count measurement result from a step counting device attached to a livestock animal, the estrus notifying apparatus comprising:
an obtaining unit that obtains the step count measurement result of the livestock animal, a report location and a report time of the step count measurement result, and weather information that corresponds to the report location and the report time;
a determining unit that determines based on the weather information, whether correction of the step count measurement result is required, and determines based on a result of determining whether the correction is required and the step count measurement result, estrus of the livestock animal; and
an output unit that outputs identification information of the livestock animal determined to be in estrus.
